# EUROPEAN PATENT APPLICATION

(11) **EP 1 657 482 A2**
(43) Date of publication of application: **17.05.2006**
(21) Application number: 05024327.8
(22) Date of filing: 08.11.2005
(51) Int. Cl.: F16L 39/00, F16L 41/02

(54) **Pipe arrangement branching structure, method for working perforated pipe and method for working branch pipe**

(30) Priority: 10.11.2004 JP 2004326923
(71) Applicant: Calsonic Kansei Corporation, Tokyo 164-8602 (JP)
(72) Inventor: Takasaki, Hiromi, Nakano-ku Tokyo 164-8602 (JP); Sagara, Takashi, Nakano-ku Tokyo 164-8602 (JP); Takamatsu, Yoshikazu, Nakano-ku Tokyo 164-8602 (JP); Sato, Susumu, Ashikaga-shi Togichi 326-0846 (JP)
(74) Representative: Grünecker, Kinkeldey, Stockmair & Schwanhäusser Anwaltssozietät

(57) **Abstract**

A pipe arrangement branching structure is provided with a perforated pipe having two holes partitioned by a partition wall and a plurality of branch pipes connected to the respective holes of the perforated pipe in an air-tight manner. The holes of the perforated pipe at an end thereof are formed to have shapes coincident with outer shapes of the respective branch pipes by plastic deformation work. The respective branch pipes are inserted into the holes formed by the plastic deformation work and the perforated pipe and the respective branch pipes are brazed.

## Description

### BACKGROUND OF THE INVENTION

### 1. Field of the Invention

The present invention relates to a pipe arrangement branching structure including a perforated pipe having a plurality of holes and branch pipes connected to the respective holes of the perforated pipe, a method for working a perforated pipe, and a method for working a branch pipe.

### 2. Description of the Related Art

As shown in Fig. 1, a pipe arrangement branching structure described in Japanese Patent Application Laid-open No. 2002-5379 includes a first perforated pipe 101 having two holes 101a and 101b partitioned by a partition wall 100, a second perforated pipe 103 having two holes 103a and 103b partitioned by a partition wall 102 likewise, and a joint pipe 105 having two coupling holes 105a and 105b branched by a partition wall 104 and bent at a right angle. The first and the second perforated pipes 101 and 103 are respectively inserted into both ends of the joint pipe 105 and joint faces of the former pipes and the latter pipe are fixed by an adhesive.

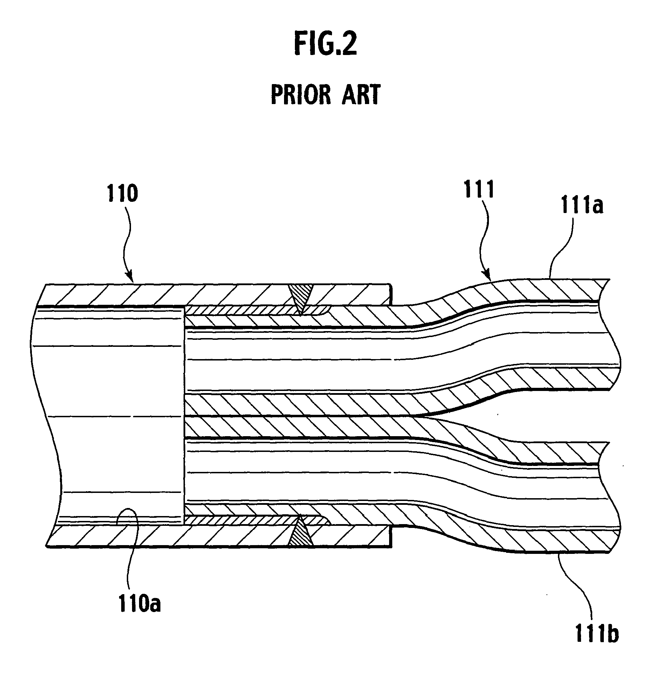

As shown in Fig. 2, a pipe arrangement branching structure described in Japanese Utility Model Application Publication No. S64-6465 includes a single-hole pipe 110 with a single-hole 110a and a perforated pipe 111 obtained by bundling a plurality of single pipes 111a and 111b by welding. The perforated pipe 111 is inserted into an end of the single-hole pipe 110, and joint faces of both pipes are fixed by welding.

### SUMMARY OF THE INVENTION

Various pipes can be arranged in various modes, and there is a demand for arranging a plurality of flow paths utilizing a mixed route of the same route and other routes. For example, a heating apparatus for a vehicle can have a hot water heater for front seats and a hot water heater for rear seats connected to an engine cooling section in parallel by pipes, and cooling water heated by the engine is fed to the hot water heater for front seats and the hot water heater for rear seats. In this heating apparatus for a vehicle, it is preferable in view of prevention of heat radiation or reduction in piping space that the same route is adopted for most part of a supplying pipe and a returning pipe between the engine and the hot water heater for rear seats, and other routes are adopted for the remaining pipes.

In the former conventional pipe arrangement branching structure, however, since respective holes 101a and 101b of the first perforated pipe 101, and respective holes 103a and 103b of the second perforated pipe 103 are connected to each other, routes for the respective holes 101a, 101b, 103a, and 103b can be only set by the same arrangement route. The latter pipe arrangement branching structure has the holes of the perforated pipe 111 and the hole 110a of the single-hole pipe 110 connected to each other, and the holes of the perforated pipe 111 are merely utilized as a junction route. In the conventional art, therefore, such a pipe arrangement branching structure in which a plurality of flow paths are constituted as a mixed route of the same route and another route, is not proposed.

It is an object of the present invention to provide a pipe arrangement branching structure including a perforated pipe and branch pipes connected to respective holes of the perforated pipe.

It is another object of the present invention to provide a method for working a perforated pipe and a method for working a branch pipe used in the pipe arrangement branching structure.

In order to achieve the above object, according to a first aspect of the present invention, there is provided a pipe arrangement branching structure including a perforated pipe having a plurality of holes partitioned by a partition wall, and a plurality of branch pipes connected to respective holes of the perforated pipe in an air-tight manner.

According to the above configuration, since the respective holes of the perforated pipe are connected to the branch pipes, the perforated pipe can be branched. That is, a pipe arrangement branching structure in which a plurality of flow paths are constituted as a mixed route of the same route and another route can be provided.

An outer shape of the perforated pipe may be formed to have a substantially circular section. According to this configuration, bending work on the perforation pipe is facilitated.

The respective branch pipes may be inserted into the respective holes of the perforated pipe, and the perforated pipe and the respective branch pipes may be brazed to each other. According to this configuration, since the perforated pipe and the branch pipes can be connected without using a j oint adapter, the number of parts and cost can be reduced.

Working for plastic deformation may be applied to an end of the perforated pipe and shapes of the respective holes may be formed to coincide with the outer shapes of the respective branch pipes. According to this configuration, the perforated pipe and the branch pipes can be directly connected to each other by working only the perforated pipe.

Working for plastic deformation may be applied to ends of the respective branch pipes and outer shapes of the branch pipes may be formed to coincide with the shapes of the respective holes of the perforated pipe. According to this configuration, the perforated pipe and the branch pipes can be directly connected to each other by working only the branch pipes.

According to a second aspect of the invention, there is provided a method for working a perforated pipe in a pipe arrangement branching structure including a perforated pipe having a plurality of holes partitioned by a partition wall, and a plurality of branch pipes connected to respective holes of the perforated pipe in a liquid-tight manner, the method comprising: performing working for plastic deformation by using a rod jig which is inserted into each hole of the perforated pipe to regulate a shape of an inner peripheral face of the hole into a predetermined shape and a press die which is disposed on an outer peripheral face of the perforated pipe to regulate a shape of the outer peripheral face of the perforated pipe to a predetermined shape.

According to the method, since respective holes of the perforated pipe are connected to the branch pipes, the perforated pipe can be branched. A pipe arrangement branching structure in which a plurality of flow paths are constituted as a mixed route of the same route and another route is provided. Further, the perforated pipe and the branch pipes can be directly connected to each other by working only the perforated pipe.

According to a third aspect of the invention, there is provided a method for working a branch pipe in a pipe arrangement branching structure including a perforated pipe having a plurality of holes partitioned by a partition wall, and a plurality of branch pipes connected to respective holes of the perforated pipe in a liquid-tight manner, the method comprising: performing working for plastic deformation by using a rod jig which is inserted into each of branch pipes to regulate a shape of an inner peripheral face of the branch pipe to a predetermined shape and a press die which is arranged on an outer peripheral face of the branch pipe to regulate a shape of the outer peripheral face of the branch pipe to a predetermined shape.

According to the method, since the respective holes of the perforated pipe are connected to the branch pipes, a pipe arrangement branching structure in which a plurality of flow paths are constituted as a mixed route of the same route and another route is provided. The perforated pipe and the branch pipes can be directly connected to each other by working only the branch pipes.

According to a fourth aspect of the invention, there is provided a method for working a perforated pipe in a pipe arrangement branching structure including a perforated pipe having a plurality of holes partitioned by a partition wall, and a plurality of branch pipes connected to respective holes of the perforated pipe in a liquid-tight manner, the method comprising: applying bending work for changing the orientation of a longitudinal direction of the perforation pipe to the perforation pipe.

According to the method, since the respective holes of the perforated pipe are connected to the branch pipes, a pipe arrangement branching structure in which a plurality of flow paths are constituted as a mixed route of the same route and another route is provided. Since the perforated pipe can be arranged along a curved arrangement route, the degree of freedom in designing the layout of the perforated pipe is improved.

According to a fifth aspect of the invention, there is provided a method for working a perforated pipe in a pipe arrangement branching structure including a perforated pipe having a plurality of holes partitioned by a partition wall, and a plurality of branch pipes connected to respective holes of the perforated pipe in a liquid-tight manner, the method comprising: applying twisting work for twisting the perforated pipe about its axial center to the perforated pipe.

According to the method, since the respective holes of the perforated pipe are connected to the branch pipes, a pipe arrangement branching structure in which a plurality of flow paths are constituted as a mixed route of the same route and another route is provided. Since the orientation of the partition wall and a relative arrangement among the holes of the end of the perforation pipe can be changed, connectability of the perforated pipe with the branch pipes and the degree of freedom in designing the layout of the branch pipes are improved.

According to a sixth aspect of the invention, there is provided a method for working a perforated pipe in a pipe arrangement branching structure including a perforated pipe having a plurality of holes partitioned by a partition wall, and a plurality of branch pipes connected to respective holes of the perforated pipe in a liquid-tight manner, the method comprising: applying bending work for changing the orientation of a longitudinal direction of the perforation pipe and twisting work for twisting the perforated pipe about its axial center to the perforated pipe.

According to the method, since the respective holes of the perforated pipe are connected to the branch pipes, a pipe arrangement branching structure in which a plurality of flow paths are constituted as a mixed route of the same route and another route is provided. Since the perforated pipe can be arranged along a curved arrangement route, the degree of freedom in designing the layout of the perforated pipe is improved, and since the orientation of the partition wall and a relative arrangement among the holes of the perforation pipe can be changed, connectability of the perforated pipe with the branch pipes and the degree of freedom in designing the layout of the branch pipes are improved.

Alternatively, the bending work may be first applied to the perforated pipe followed by the twisting work. According to this method, since the bending work is performed before the partition wall is twisted, damage to the partition wall can be suppressed during the bending work as much as possible.

Alternatively, the twisting work may be first applied to the perforated pipe followed by the bending work. According to this method, since the twisting work is performed before the partition wall is bent, a large twisting angle can be obtained as a whole, while a twisting angle per unit length is suppressed as much as possible.

The twisting work and the bending work may be simultaneously applied to the perforated pipe. According to this method, the bending work and the twisting work for the perforated pipe can be performed quickly.

### BRIEF DESCRIPTION OF THE DRAWINGS

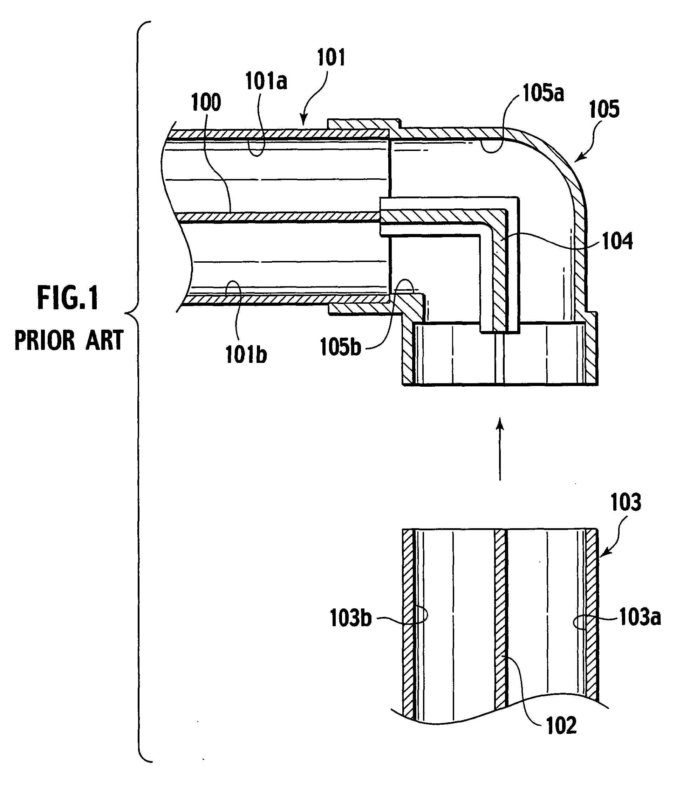

Fig. 1 is a sectional view showing a pipe arrangement branching structure according to a conventional art;
Fig. 2 is a sectional view showing a pipe arrangement branching structure according to another conventional art;
Fig. 3 is a sectional view showing a pipe arrangement branching structure according to a first embodiment of the present invention;
Figs. 4A and 4B are a front view and a sectional view of a perforated pipe before being worked according to the first embodiment;
Fig. 5 shows a state in which a rod jig has been inserted into holes of a perforated pipe according to the first embodiment;
Fig. 6 shows a state in which diameters of the holes of the perforated pipe have been expanded by the rod jig according to the first embodiment;
Fig. 7 shows a state in which the perforated pipe has been pressed by press dies according to the first embodiment;
Figs. 8A and 8B are a front view and a sectional view of a perforated pipe after being worked according to the first embodiment;
Figs. 9A, 9B, and 9C are a front view of a perforated pipe before being worked, a front view of the perforated pipe during working, and a front view of the perforated pipe after being worked according to a modification of the first embodiment;
Figs. 10A and 10B are a sectional view of a pipe arrangement branching structure and a sectional view thereof taken along line 10B-10B in Fig. 10A according to a second embodiment of the invention;
Fig. 11 is a perspective view of branch pipes before being worked according to the second embodiment;
Fig. 12 is a perspective view of the branch pipes after being worked according to the second embodiment;
Fig. 13 is a sectional view of a pipe arrangement branching structure according to a third embodiment of the invention;
Fig. 14 is a sectional view of a joint adapter according to the third embodiment;
Fig. 15 is a perspective view of a packing according to the third embodiment;
Fig. 16 is a perspective view of a pipe arrangement branching structure according to a fourth embodiment of the invention;
Fig. 17 is a configurational view showing a working operation for producing a bent portion according to the fourth embodiment;
Fig. 18 is a perspective view of a pipe arrangement branching structure according to a fifth embodiment of the invention;
Fig. 19 is a configurational view showing a working operation for producing a twisted portion according to the fifth embodiment;
Fig. 20 is a sectional view showing a modification of the twisting work according to the fifth embodiment;
Fig. 21 is a sectional view of a pair of outer periphery clamping sections used for another modification of the twisting work according to the fifth embodiment;
Fig. 22 is a perspective view of a pipe arrangement branching structure according to a sixth embodiment of the invention;
Fig. 23 is a configurational view showing a working operation for producing a bent portion and a twisted portion according to the sixth embodiment;
Fig. 24 is a perspective view of a perforated pipe after being worked according a different working method for producing the bent portion and the twisted portion according to the sixth embodiment;
Fig. 25 is a perspective view of the perforated pipe after being worked for bending showing a different working method for producing the bent portion and the twisted portion according to the sixth embodiment;
Fig. 26 is a perspective view for explaining the twisting work, showing the different working method for producing the bent portion and the twisted portion according to the sixth embodiment; and
Fig. 27 is a sectional view of a perforated pipe taken along line 27-27 in Fig. 26 showing the different working method for producing the bent portion and the twisted portion according to the sixth embodiment.

### BEST MODE FOR CARRYING OUT THE INVENTION

Embodiments of the present invention will be explained below with reference to the drawings.

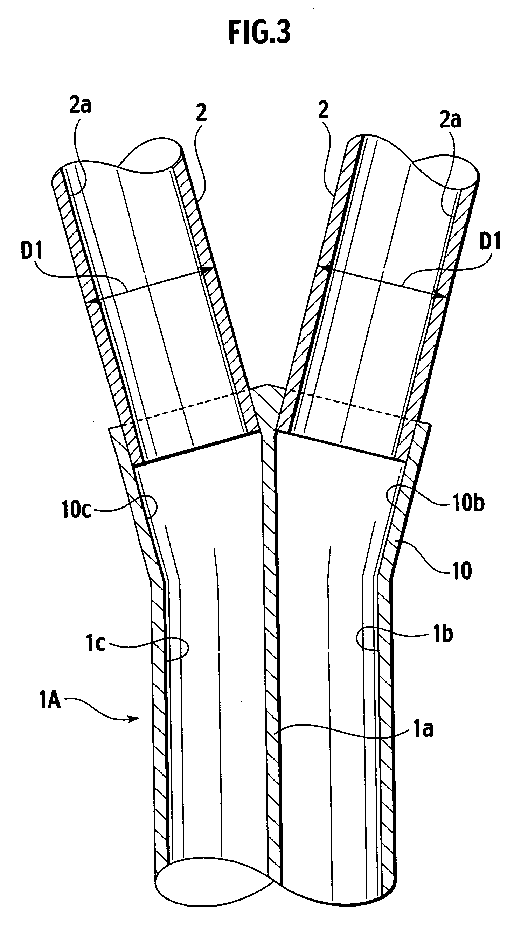

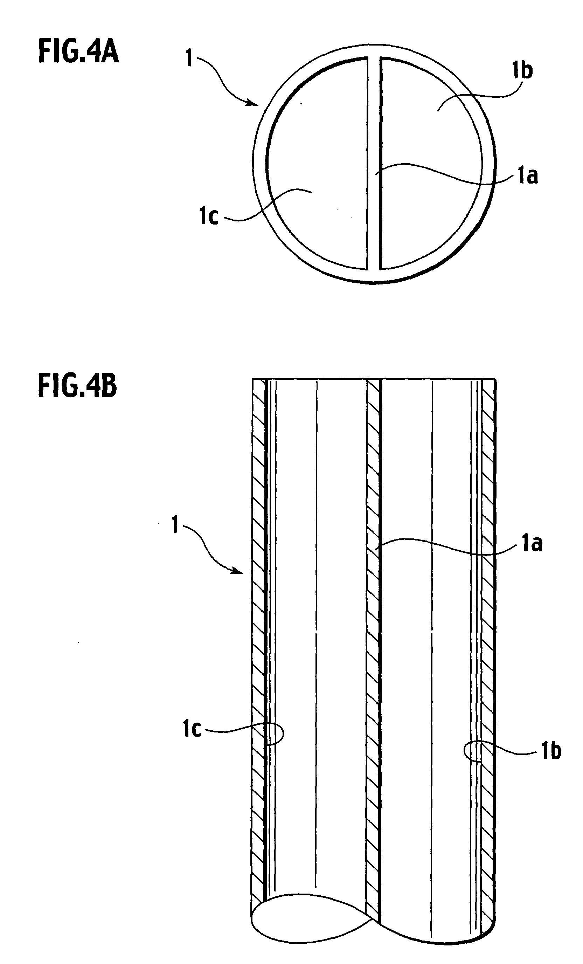

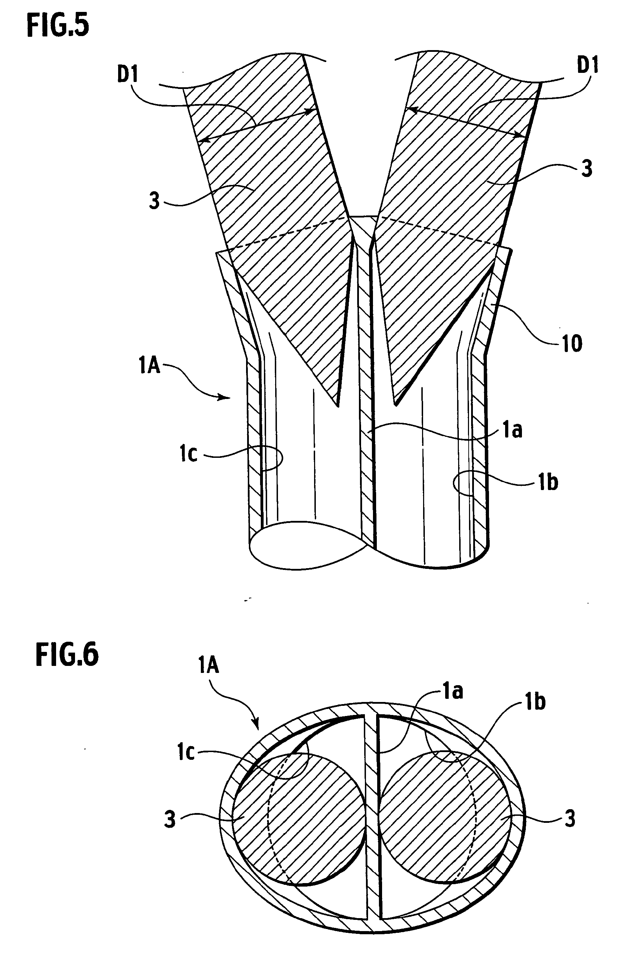

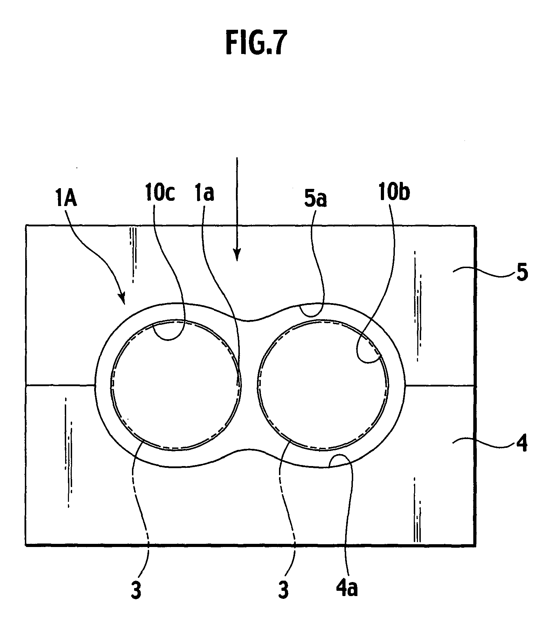

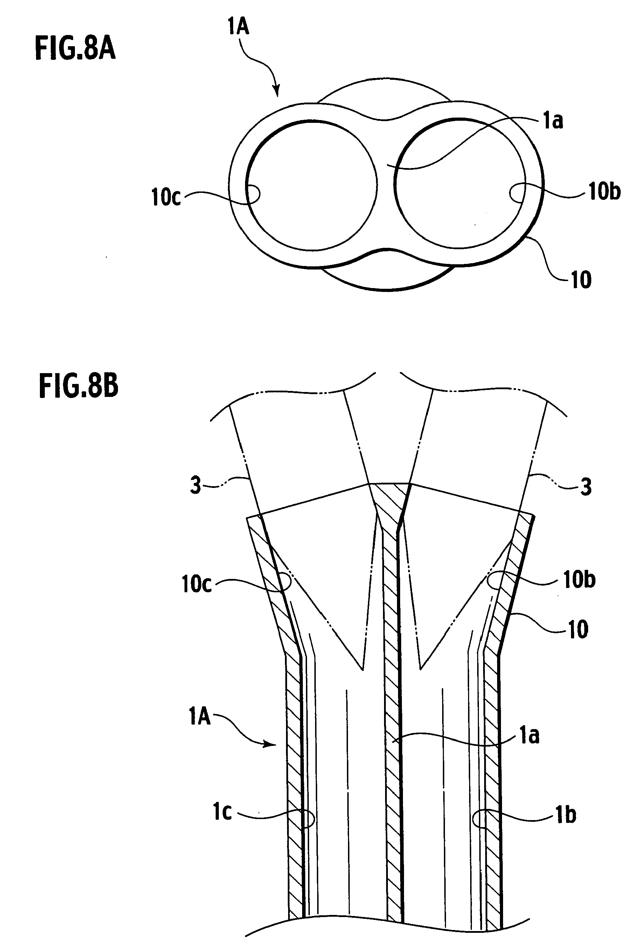

Figs. 3 to 8B show a first embodiment of the present invention, Fig. 3 being a sectional view of a pipe arrangement branching structure thereof, Fig. 4A being a front view of a perforated pipe 1 before being worked, Fig. 4B being a sectional view of the perforated pipe 1 before being worked, Fig. 5 showing a state in which rod jigs 3 and 3 have been inserted into holes 1b and 1c of the perforated pipe 1, Fig. 6 showing a state in which diameters of the holes 1b and 1c have been expanded by the rod jigs 3 and 3, Fig. 7 showing a state in which a perforated pipe 1A has been pressed by press dies 4 and 5, Fig. 8A being a front view of the perforated pipe 1A after being worked, and Fig. 8B being a sectional view of the perforated pipe 1A after being worked.

As shown in Fig. 3, the pipe arrangement branching structure is constituted of the perforated pipe 1A having the two holes 1b and 1c partitioned by a partition wall 1a, and two branch pipes 2 and 2 inserted into the respective holes 1b and 1c of the perforated pipe 1A, respectively.

The perforated pipe 1A extends straightly along its longitudinal direction, and it has an outer shape with a substantially circular section except for an end thereof. The two holes 1b and 1c partitioned by the partition wall 1a are positioned symmetrically, and they are formed to have the same half-moon section. An outer shape of an end 10 of the perforated pipe 1A is formed in a substantially elliptic shape and the respective holes 10b and 10c at the end 10 are formed so as to have circular sectional shapes coincident with outer shapes of the branch pipes 2 and 2 by plastic deformation (see Fig. 8A).

Each of the branch pipes 2 and 2 has an outer shape with a substantially circular section (an outer diameter: D1) and has a single circular hole 2a. The respective branch pipes 2 and 2 are inserted into the respective holes 1b and 1c of the perforated pipe 1A and joint faces therebetween are fixed by brazing in an air-tight manner.

A working procedure for the perforated pipe 1A will be explained next. As shown in Figs. 4A and 4B, the perforated pipe 1A before being worked has a straight shape with two half-moon holes 1b and 1c partitioned by the partition wall 1a extending vertically. Diameters of the respective holes 1b and 1c of the straight perforated pipe 1A are expanded by inserting cylindrical rod jigs 3 and 3 with a diameter of D1 having a conical distal end, into the holes 1b and 1c as shown in Fig. 5. Thus, the end 10 of the perforated pipe 1A is plastically deformed to a shape shown in Fig. 6.

As shown in Fig. 7, next, the end 10 of the perforated pipe 1A to which the rod jigs 3 and 3 have been inserted is set to recesses 4a and 5a of a pair of press dies 4 and 5 and a pressing pressure is applied to the pair of press dies 4 and 5. A space defined by the recesses 4a and 5a of both of the pair of press dies 4 and 5 coincides with an outer shape defined by twin branch pipes 2, and, according to a press working, inner peripheral faces of the holes 10b and 10c at the end 10 of the perforated pipe 1A are plastically deformed so as to conform with outer peripheral shapes of the rod jigs 3 and 3 and an outer peripheral face at the end 10 is plastically deformed so as to conform with the inner peripheral shape defined by the recesses 4a and 5a of the press dies 4 and 5, as shown in Figs. 8A and 8B. Working on the perforated pipe 1A is terminated in the above manner.

Alternatively, as a working procedure for the perforated pipe 1A, the end 10 of the perforated pipe 1A may be first worked by the upper and lower press dies 4 and 5 and the rod jigs 3 and 3 may be then inserted into the respective holes 1b and 1c of the perforate pipe 1A.

A pipe arrangement branching structure shown in Fig. 3 can be obtained by inserting two branch pipes 2 and 2 into the respective holes 10b and 10c at the end 10 of the perforated pipe 1A thus worked, respectively, and conducting brazing.

In the pipe arrangement branching structure described above, since the holes 10b and 10c at the end 10 of the perforated pipe 1A are connected to two branch pipes 2 and 2, the perforated pipe 1A can be branched. That is, a pipe arrangement branching structure in which a plurality of flow paths are constituted as a mixed route of the same route and another route can be provided.

In the pipe arrangement branching structure according to the first embodiment, since mounting angles of the branch pipes 2 and 2 to the end 10 of the perforated pipe 1A can be made smooth, flow paths with reduced flow resistance can be formed.

According to the first embodiment, since the outer shape of the perforated pipe 1A has a substantially circular section, bending work on the perforated pipe 1A can be conducted easily.

According to the first embodiment, since the respective branch pipes 2 and 2 are inserted into the respective holes 10b and 10c at the end 10 of the perforated pipe 1A and the perforated pipe 1A and the branch pipes 2 and 2 are brazed to each other, the perforated pipe 1A and the two branch pipes 2 and 2 are connected without using any joint adapter, so that the number of parts and cost are reduced.

According to the first embodiment, since the working for plastic deformation is conducted on the end 10 of the perforated pipe 1A and the shapes of the respective holes 1b and 1c are formed to coincide with the outer shapes of the branch pipes 2 and 2, the perforated pipe 1A and the two branch pipes 2 and 2 can be directly connected to each other by working only the perforated pipe 1A.

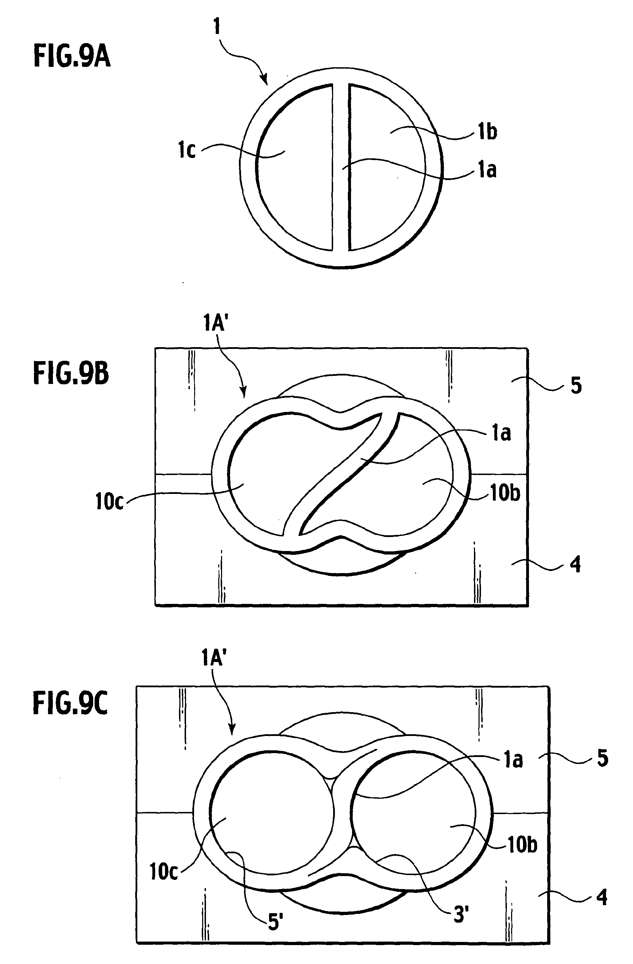

Figs. 9A to 9C show a modification of the first embodiment, Fig. 9A being a front view of the perforated pipe 1A before being worked, Fig. 9B being a front view of a perforated pipe 1A' in the course of working, and Fig. 9C being a front view of the perforated pipe 1A' after being worked.

In the worked perforated pipe 1A according to the first embodiment, the partition wall 1a extends vertically, but in the worked perforated pipe 1A' according to the modification, the partition wall 1a extends obliquely. That is, the partition wall 1a is twisted at an angle of 45° by adjusting insertion directions and the like of the rod jigs 3 and 3 in the respective holes 10b and 10c at the end 10 of the perforated pipe 1A'.

By twisting in this manner, axial directions and positions of the respective holes 10b and 10c at the end 10 of the perforated pipe 1A' can be freely set to desired directions and positions. Further, since a compression force acting on the partition wall 1a during a press working can be reduced, the respective holes 10b and 10c can be worked easily.

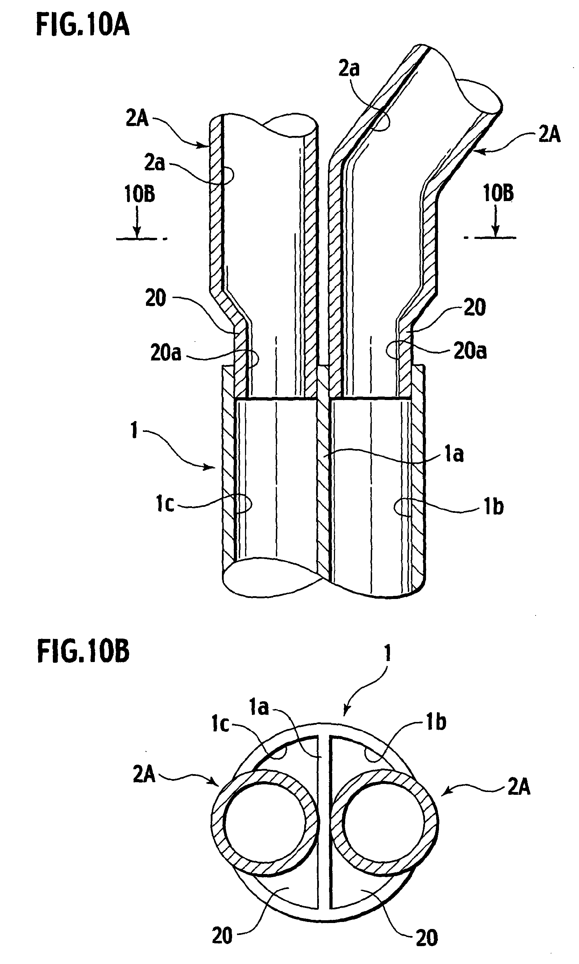

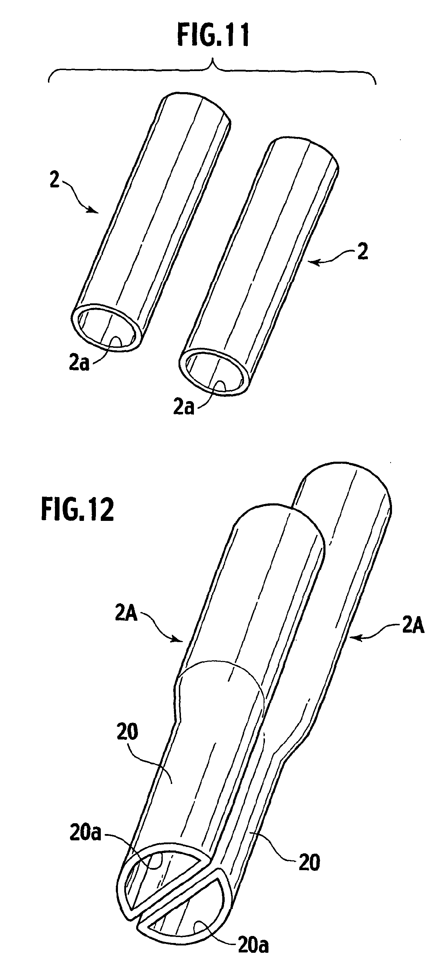

Figs. 10 to 12 show a second embodiment of the present invention, Fig. 10A being a sectional view of a pipe arrangement branching structure, Fig. 10B being a sectional view of the pipe arrangement branching structure taken along line 10B-10B in Fig. 10A, Fig. 11 being a perspective view of the branch pipes 2 and 2 before being worked, and Fig. 12 being a perspective view of the branch pipes 2A and 2A after being worked.

As shown in Figs. 10A and 10B, the pipe arrangement branching structure is constituted of a perforated pipe 1 having two holes 1b and 1c partitioned by a partition wall 1a, and two branch pipes 2A and 2A inserted into the respective holes 1b and 1c of the perforated pipe 1.

The perforated pipe 1 is formed in a straight shape in which an outer shape thereof has a substantially circular section and holes 1b and 1c formed therein each has a half-moon shape.

The respective branch pipes 2A and 2A have outer shapes with a substantially circular section except for their ends 20, and the ends are subjected to plastic deformation work. Sizing is performed by the plastic deformation work such that outer shapes of the ends 20 are formed to be half-moon shapes and to coincide with shapes of the holes 1b and 1c of the perforated pipe 1A. The holes 20a at the ends 20 also have a half-moon shape. The ends 20 of the respective branch pipes 2A and 2A are inserted into the respective holes 1b and 1c of the perforated pipe 1A and joint faces therebetween are fixed in an air-tight manner by brazing.

A working procedure for the branch pipes 2A and 2A will be explained next. As shown in Fig. 11, respective branch pipes 2 and 2 before being worked have straight shapes with an outer shape of a substantially circular section. Respective holes 2a and 2a of the respective branch pipes 2A and 2A with the straight shape are expanded in diameter thereof by inserting semi-cylindrical rod jigs with a conical distal end (not shown) into the respective holes 2a and 2a. Next, the ends 20 of the branch pipes 2A and 2A inserted with the rod jigs are set in both recesses of a pair of press dies (not shown) and a pressing pressure is applied between the pair of the press dies. A space defined by both the recesses of the pair of press dies coincides with inner peripheral shapes of the holes 1b and 1c of the perforated pipe 1A, and the ends 20 of the branch pipes 2A and 2A are plastically deformed by pressing work such that inner peripheral faces thereof are coincident with outer peripheral shapes of the rod jigs and outer peripheral faces thereof are coincident with the inner peripheral shapes in the recesses of the press dies. As described above, working on the branch pipes 2A and 2A is terminated.

Alternatively, as a working procedure for the branch pipes 2A and 2A, the ends 20 of the branch pipes 2A and 2A can be first pressed by a pair of press dies, and then the rod jigs can be inserted into the respective holes 2a and 2a of the branch pipes 2A and 2A subjected to the press work.

The pipe arrangement branching structure shown in Figs. 10A and 10B are obtained by inserting the ends 20 of the respective branch pipes 2A and 2A thus worked into the respective holes 1b and 1c of the perforated pipe 1 and performing brazing.

In the pipe arrangement branching structure thus configured, since the respective holes 1b and 1c of the perforated pipe 1 are connected to the branch pipes 2A and 2A, the perforated pipe 1 can be branched. That is, a pipe arrangement branching structure in which a plurality of flow paths are constituted as a mixed route of the same route and another route can be provided.

According to the second embodiment, since the outer shape of the perforated pipe 1 has a substantially circular section, bending work on the perforated pipe 1 can be performed easily.

According to the second embodiment, since the respective branch pipes 2A and 2A are inserted into the respective holes 1b and 1c of the perforated pipe 1, and the perforated pipe 1 and the respective branch pipes 2A and 2A are brazed to each other, the perforated pipe 1 and the two branch pipes 2A and 2A can be connected to each other without using any joint adapter, so that the number of parts and cost can be reduced.

According to the second embodiment, since the outer shapes of the branch pipes 2A and 2A are formed to coincide with the shapes of the holes 1b and 1c of the perforated pipe 1 by performing the plastic deformation work on the ends 20 of the respective branch pipes 2A and 2A, the perforated pipe 1 and the two branch pipes 2A and 2A can be directly connected to each other by working only the branch pipes 2A and 2A. When the perforated pipe 1 has a longitudinal size longer than those of the branch pipes 2A and 2A, much time is required for working the perforated pipe 1 as in the first embodiment, which results in poor workability. In such a case, excellent workability is achieved by working the branch pipes 2A and 2A with a longitudinal size smaller than that of the perforated pipe as in the first embodiment, which is desirable. In a reverse size-relationship, excellent workability is achieved by working the perforated pipe 1, which is desirable.

According to the second embodiment, since the shapes of the respective holes 1b and 1c of the perforated pipe 1 and the branch pipes 2A and 2A have the same half-moon shape, a mounting direction between the both is determined unambiguously, so that assembling workability is improved and a brazing jig is simplified.

By expanding the diameter of the end of the perforated pipe 1 in a flaring shape, brazing filler metal flow during brazing work can be prevented, so that automation of a brazing work is-facilitated.

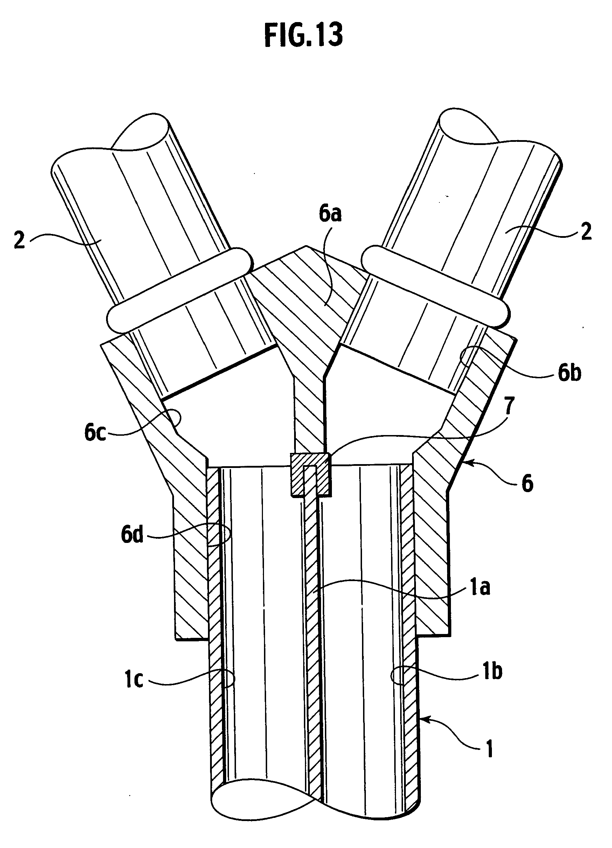

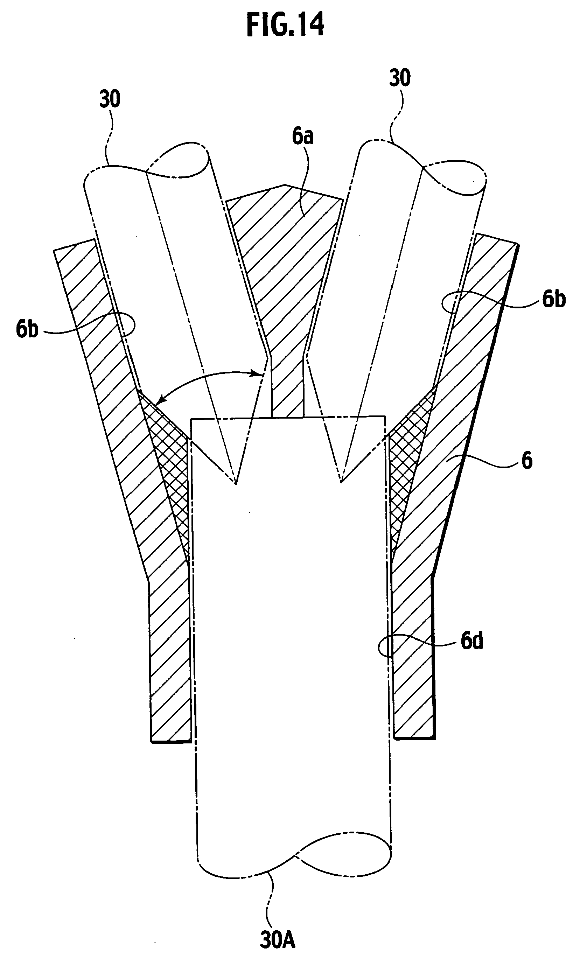

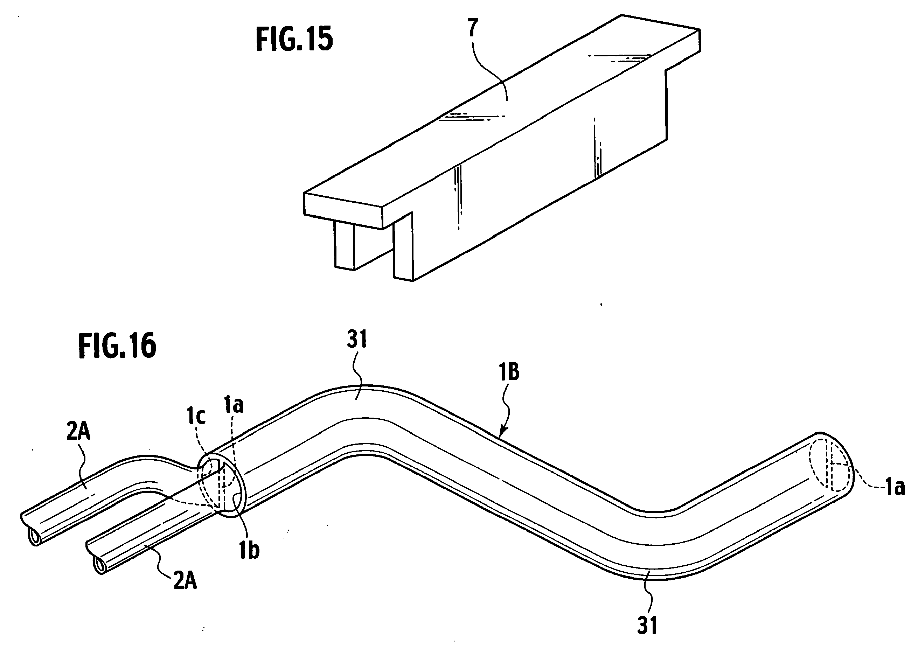

Figs. 13 to 15 show a third embodiment of the invention, Fig. 13 being a sectional view of a pipe arrangement branching structure thereof, Fig. 14 being a sectional view of a joint adapter 6 used therein, and Fig. 15 being perspective view of a packing 7 used therein.

As shown in Fig. 13, the pipe arrangement branching structure is constituted of a perforated pipe 1 having two holes 1b and 1c partitioned by a partition wall 1a, two branch pipes 2 and 2 each having a single-hole 2a, and a joint adapter 6 coupling the perforated pipe 1 and the two branch pipes 2 and 2 together. The perforated pipe 1 is pressure-fitted into one end of the joint adapter 6, while two branch pipes 2 and 2 are pressure-fitted into the other end thereof, and joint faces of the respective pipes are fixed using adhesive.

Ends of the perforated pipe 1 and the branch pipes 2 and 2 are not applied with the works performed in the first and the second embodiments.

The joint adapter 6 has two branch pipe holes 6b and 6c which are branched by a partition wall 6a and are opened at one end of the joint adapter, and a perforated pipe hole 6d which communicates with the two branch pipe holes 6b and 6c and is opened at the other end thereof. The joint adapter 6 is produced by die-casting. The joint adapter die-cast is finished by cutting inner peripheral faces of the branch pipe holes 6b and 6c and the perforated pipe hole 6d precisely using cutting tools 30 and 30A, as shown in Fig. 14. The packing 7 as shown in Fig. 15 is mounted on an end of the partition wall 6a, and the partition wall 1a of the perforated pipe 1 is pressure-fitted to the packing 7, so that the two holes 1b and 1c of the perforated pipe 1 are connected to the joint adapter 6 while an air-tight state is maintained between the two holes 1b and 1c.

In the pipe arrangement branching structure thus configured, the perforated pipe 1 and the two branch pipes 2 and 2 can be connected to each other via the joint adapter 6. Further, it is unnecessary to perform any working on the ends of the perforated pipe 1 and the branch pipes 2 and 2.

According to the third embodiment, since the joint adapter 6 is die-cast, cutting cost and material cost can be reduced.

According to the third embodiment, when adhesive is applied to joint faces of the perforated pipe 1 and the branch pipes 2 and 2, and the joint adapter 6, and these pipes are pressure-fitted into the holes of the joint adapter 6, the adhesive serves as lubricant at the pressure-fitting time, so that a pressure-fitting work is facilitated.

When there is any flaw on the joint face, the adhesive enters in the flaw to embed it, so that the adhesive serves as a sealing material after pressure-fitting is conducted.

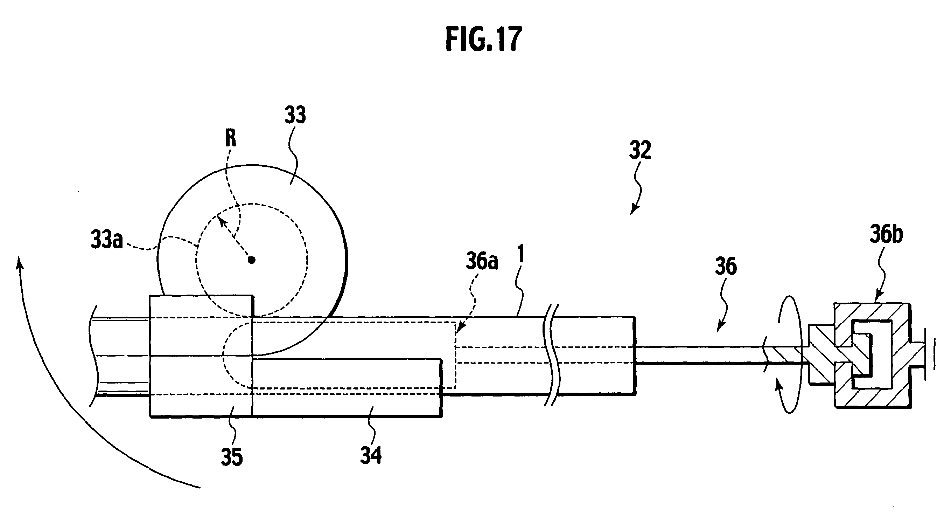

Figs. 16 and 17 show a fourth embodiment of the invention, Fig. 16 being a perspective view of a pipe arrangement branching structure, and Fig. 17 being a configurational view showing working operation for forming a bent portion 31.

As shown in Fig. 16, a pipe arrangement branching structure is constituted of a perforated pipe 1B having two holes 1b and 1c partitioned by a partition wall 1a, and two branch pipes 2A and 2A connected to the respective holes 1b and 1c of the perforated pipe 1B in an air-tight manner like the second embodiment. Since a connection structure between the perforated pipe 1B and the respective branch pipes 2A and 2A is similar to that in the second embodiment, explanation thereof is omitted for avoiding redundant explanation.

Unlike the perforated pipe in the second embodiment, the perforated pipe 1B is not formed straightly along its longitudinal direction but has two bent portions 31 through which the orientation of the longitudinal direction is changed.

A bending work for producing the bent portions 31 of the perforated pipe 1B will be explained next. As shown in Fig. 17 , the bending work is performed using a bent portion producing apparatus 32. The bent portion producing apparatus 32 is provided with a bending die 3 and 3 against which an outer periphery of a perforated pipe 1 is caused to abut so that the bent portion 31 having a predetermined bent radius R can be provided on the perforated pipe 1, a pressure die 34 for pressing the perforated pipe 1 to the bending die 3 and 3, a grasping portion 35 which bends the perforated pipe 1 along the bending die 3 and 3 while moving one end of the perforated pipe 1, and core portions 36 which are respectively inserted into the holes 1b and 1c of the perforated pipe 1 to support inner walls of the holes 1b and 1c. The core portions 36 are provided with core bodies 36a which support the inner walls of the holes 1b and 1c and supporting units 36b which support the core bodies 36a movably according to movement of the inner walls of the holes 1b and 1c during bent portion formation.

According to the above configuration, the straight perforated pipe 1 is caused to abut on a die face 3 and 3a of the bending die 3 and 3 and it is pressed on the die face 3 and 3a by the pressure die 34. At that time, the pressure die 34 presses the perforated pipe 1 toward the bending die 3 and 3, while supporting a portion of the perforated pipe 1 positioned rearward of a bending start point, and the grasping portion 35 supports a portion of the perforated pipe 1 positioned forward of the bending start point. In this state, the perforated pipe 1 is pressed to the die face 3 and 3a of the bending die 3 and 3 by the grasping portion 35 while the grasping portion 35 is being moved from the bending start point toward a distal end of the perforated pipe 1. Simultaneously, the pressure die 34 is moved from the bending start point toward the grasping portion 35. At this time, the perforated pipe 1 starts bending so that a compression force is generated inside the perforated pipe 1 and a tensile force is generated outside the perforated pipe 1. Although these forces act to deform the holes 1b and 1c and the partition wall 1a, the core bodies 36a abut on the inner peripheral faces of the holes 1b and 1c and the partition wall 1a, so that the inner walls of the holes 1b and 1c and the partition wall 1a are prevented from deforming locally. Since the core bodies 36a are rotatably supported by the supporting units 36b, even if the inner walls of the holes 1b and 1c move according to bending of the perforated pipe 1, the core bodies 36a can follow the movement, so that they can securely support the inner walls of the holes 1b and 1c and can reliably prevent deformation thereof. The perforated pipe 1 is bent at an approximately right angle by positioning the grasping portion 35 above the pressure die 34. Thus, the bent portion 31 is produced.

Since the perforated pipe 1B according to the fourth embodiment has the bent portions 31 in which the orientation of a longitudinal direction thereof is changed, the perforated pipe 1B can be arranged along a curved arrangement route. Accordingly, the degree of feely designing the layout of the perforated pipe 1B is improved.

In the bending work according to the fourth embodiment, when the bent portion 31 is provided at a portion of the perforated pipe 1 , the movable core portions 36 are inserted into the holes 1b and 1c and the inner walls of the holes 1b and 1c are always supported by the core bodies 36a movable according to movement of the inner walls of the holes 1b and 1c during formation of the bent portion, so that the bent portion 31 of the perforated pipe 1 is prevented from deforming and an excellent bent portion can be formed.

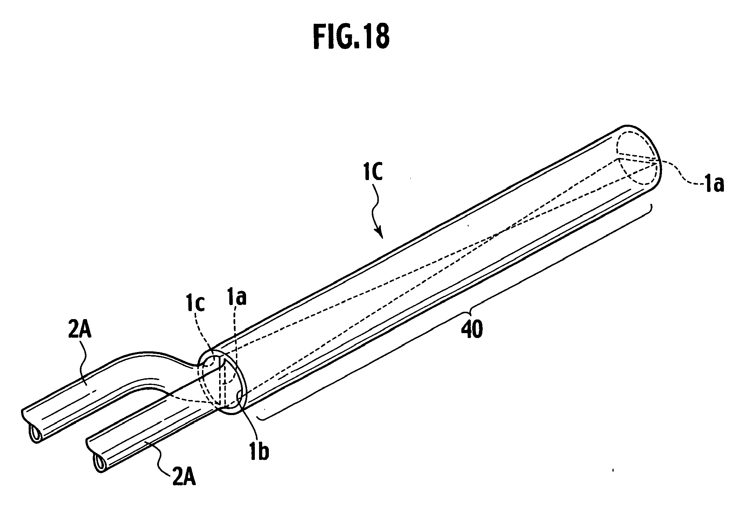

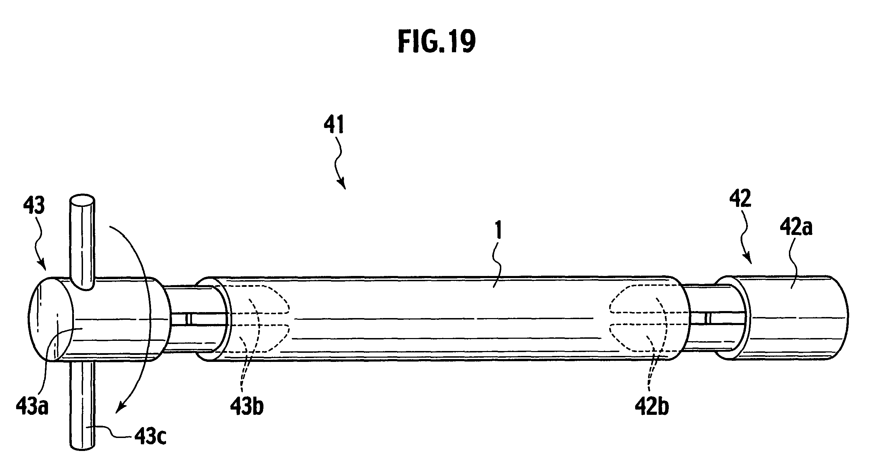

Figs. 18 and 19 show a fifth embodiment of the invention, Fig. 18 being a perspective view of a pipe arrangement branching structure and Fig. 19 being a configurational view showing working operation for producing a twisted portion 40.

As shown in Fig. 18, a pipe arrangement branching structure is constituted of a perforated pipe 1C having two holes 1b and 1c partitioned by a partition wall 1a, and two branch pipes 2A and 2A connected to the respective holes 1b and 1c of the perforated pipe 1C in an air-tight manner like the second embodiment. Since a connection structure between the perforated pipe 1C and the respective branch pipes 2A and 2A is similar to that according to the second embodiment, explanation thereof is omitted for avoiding redundant explanation.

The perforated pipe 1C is formed in a straight shape along its longitudinal direction like the second embodiment, but it has a twisted portion 40 produced by twisting the perforated pipe 1C along a circumferential direction about an axial center thereof. The twisted portion 40 is formed over substantially the whole length of the perforated pipe 1C in the fifth embodiment.

A twisting work for producing the twisted portion 40 of the perforated pipe 1C will be explained next. As shown in Fig. 19, the twisting work is conducted using a twisted portion producing apparatus 41. The twisted portion producing apparatus 41 is provided with a fixed chuck portion 42 and a movable chuck portion 43. The fixed chuck portion 42 has a base portion 42a which is supported so as not to rotate, and core portions 42b which are protruded from the-base portion 42a and is inserted into the two holes 1b and 1c of the perforated pipe 1. The movable chuck portion 43 is constituted of a base portion 43a which is supported so as to be rotatable, core portions 43b which are protruded from the base portion 43a and is inserted into the two holes 1b and 1c of the perforated pipe 1, and a handle 43c which is used for rotating the base portion 43a and the core portions 43b.

Both ends of the straight perforated pipe 1 are set to between the fixed chuck portion 42 and the movable chuck portion 43, respectively, and the twisted portion 40 can be formed on the perforated pipe 1 by rotationally operating the handle 43c of the movable chuck portion 43 by a desired twisting angle.

Since the perforated pipe 1C according to the fifth embodiment has the twisted portion 40 produced by twisting the perforated pipe about its axial center, the orientation of the partition wall 1a at the end of the perforated pipe 1C and a relative position between the two holes 1b and 1c can be changed, so that connectability of the perforated pipe 1C with the branch pipes 2A and 2A and the degree freely designing the layout of the branch pipes 2A and 2A are improved.

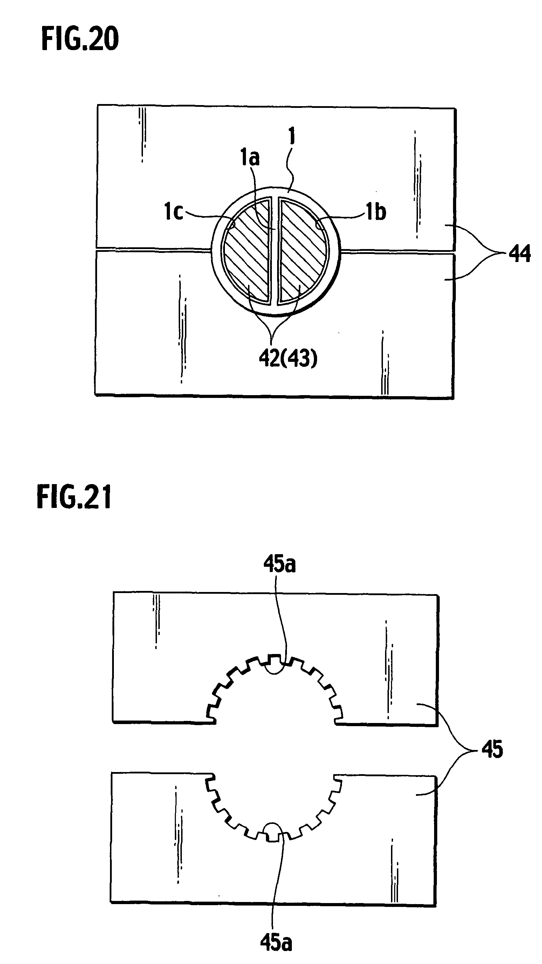

Fig. 20 is a sectional view showing a modification of the twisting work. As shown in Fig. 20, the twisting work is performed by setting the fixed chuck portion 42 or the movable chuck portion 43 to inner peripheries of the perforated pipe 1 and attaching a pair of outer periphery clamping portions 44 and 44 on an outer periphery at an end of the perforated pipe 1. With such a configuration, deformation of the end of the perforated pipe 1 toward the outer periphery can be assuredly prevented.

Fig. 21 is a sectional view showing a pair of outer periphery clamping portions 45 and 45 used for another modification of the twisting work. As shown in Fig. 21, an inner face of an arc groove 45a of each outer periphery clamping portion 45 is formed in an undulated shape. Since slippage between the outer periphery clamping portions 45 and 45 and the perforated pipe is prevented by the undulated shape, twisting work can be performed by setting only the pair of outer periphery clamping portions 45 and 45 at both ends of a perforated pipe and applying a twisting force on the perforated pipe.

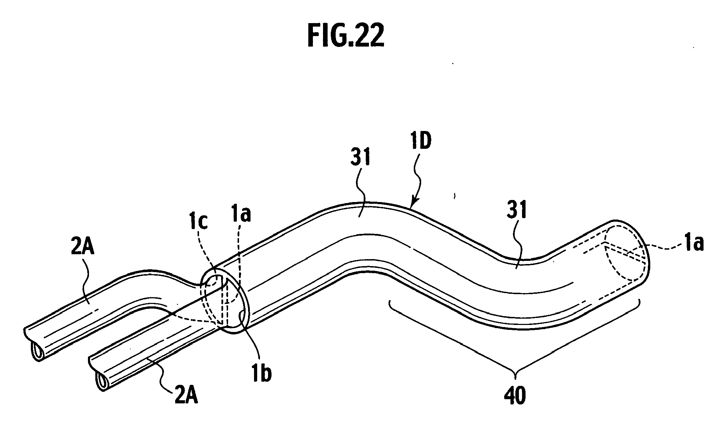

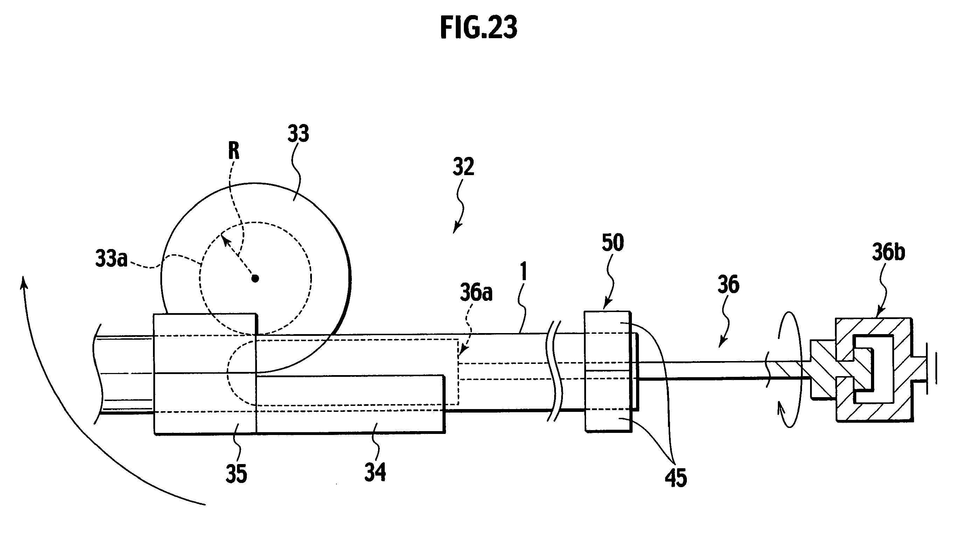

Figs. 22 and 23 show a sixth embodiment of the invention, Fig. 22 being a perspective view of a pipe arrangement branching structure and Fig. 23 being a configurational view showing a working operation for producing a bent portion 31 and a twisted portion 40.

As shown in Fig. 22, a pipe arrangement branching structure is constituted of a perforated pipe 1D having two holes 1b and 1c partitioned by a partition wall 1a, and two branch pipes 2A and 2A connected to the respective holes 1b and 1c of the perforated pipe 1D in an air-tight manner like the second embodiment. Since a connection structure between the perforated pipe 1D and the respective branch pipes 2A and 2A is similar to that according to the second embodiment, explanation thereof is omitted for avoiding redundant explanation.

Unlike the perforated pipe according tc the second embodiment, the perforated pipe 1D is not formed in a straight shape in a longitudinal direction but it has two bent portions 31 for changing the orientation of a longitudinal direction of the perforated pipe 1D and a twisted portion 40 produced by twisting the perforated pipe 1D in a circumferential direction about an axial center. The twisted portion 40 is not formed over the entire length of the perforated pipe 1D but on a portion thereof in the sixth embodiment.

Bending and twisting work for producing the bent portions 31 and the twisted portion 40 of the perforated pipe 1D will be explained next. As shown in Fig. 23, the bending/twisting work is performed using a bent portion producing apparatus 32 and a twisting chuck portion 50. Since the configuration of the bent portion producing apparatus 32 is the same as explained in the fourth embodiment, same parts are attached with same reference numerals and explanation thereof is omitted. The twisting chuck portion 50 is constituted of the pair of outer periphery clamping portions 45 and 45 explained regarding the another modification of the fifth embodiment, and a rotational driving section for rotating the pair of outer periphery clamping portions 45 and 45.

According to the above configuration, a perforated pipe 1 is set to the bent portion producing apparatus 32, and the pair of outer periphery clamping portions 45 and 45 is set to the end of the perforated pipe 1. As explained in the fourth embodiment, bending work is performed by the bent portion producing apparatus 32, and a twisting force is applied to the perforated pipe 1 via the pair of outer periphery clamping portions 45 and 45 after the first bending work. Thus, twisting occurs between the first bent portion 31 and the end of the perforated pipe 1, so that the twisted portion 40 is formed. Next, the bending/twisting work is completed by changing a position of the perforated pipe 1 to be pressed on the bending die 3 and 3 of the bent portion producing apparatus 32 and applying bending work on a second bent portion.

According to the sixth embodiment, since the perforated pipe 1D has the bent portions 31 in which the orientation of the longitudinal direction of the perforated pipe 1D has been changed and the twisted portion 40 produced by twisting the perforated pipe 1D about the axial center, the perforated pipe 1D can be arranged along a curved arrangement route, so that the degree of freedom in designing the layout of the perforated pipe 1D is improved, and the orientation of the partition wall 1a at the end of the perforated pipe 1D and a relative arrangement between the two holes 1b and 1c can be changed. As a result, connectability of the perforated pipe 1D with the branch pipes 2A and 2A and the degree of freedom in designing the layout of the branch pipes 2A and 2A are improved.

According to the sixth embodiment, after the first bent portion 31 is produced, the twisting work is performed. However, the twisting work for applying a twisting force to the perforated pipe 1 via the pair of outer periphery clamping portions 45 and 45 can be performed after the second bent portion 31 is produced. Further, alternatively, a twisting force may be applied simultaneously with the bending work, so that the bent portion 31 and the twisted portion 40 are produced simultaneously.

When the bending work is first performed and the twisting work is then performed as the working procedure for the perforated pipe 1D, since the bending work is performed before the partition wall 1a is twisted, damage to the partition wall 1a during the bending work can be suppressed as much as possible.

When the twisting work is first performed and the bending work is then performed, since the twisting work is performed before the partition wall 1a is bent, a large twisting size can be achieved. Accordingly, while a twisting angle per unit length can be suppressed as much as possible, a large twisted angle can be achieved as a whole.

When the bending work and the twisting work are conducted simultaneously, the bending work and the twisting work on the perforated pipe 1D can be performed quickly.

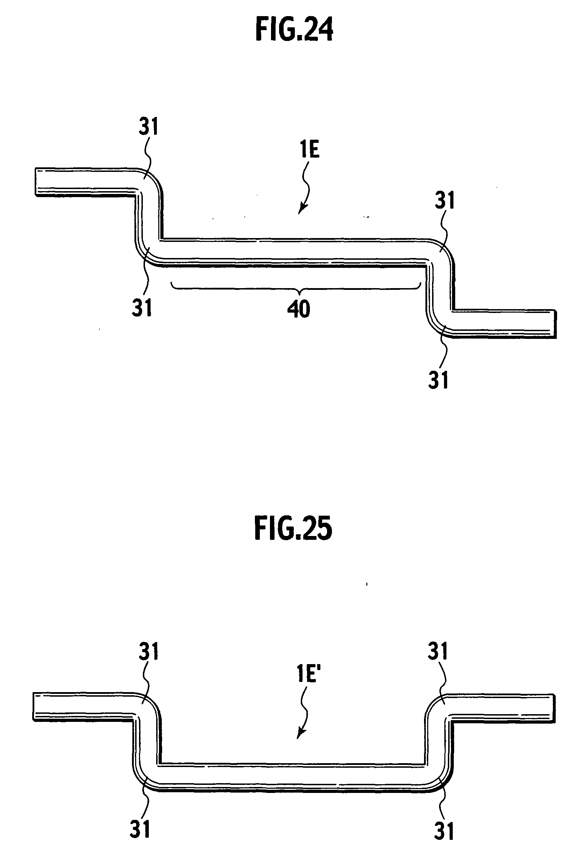

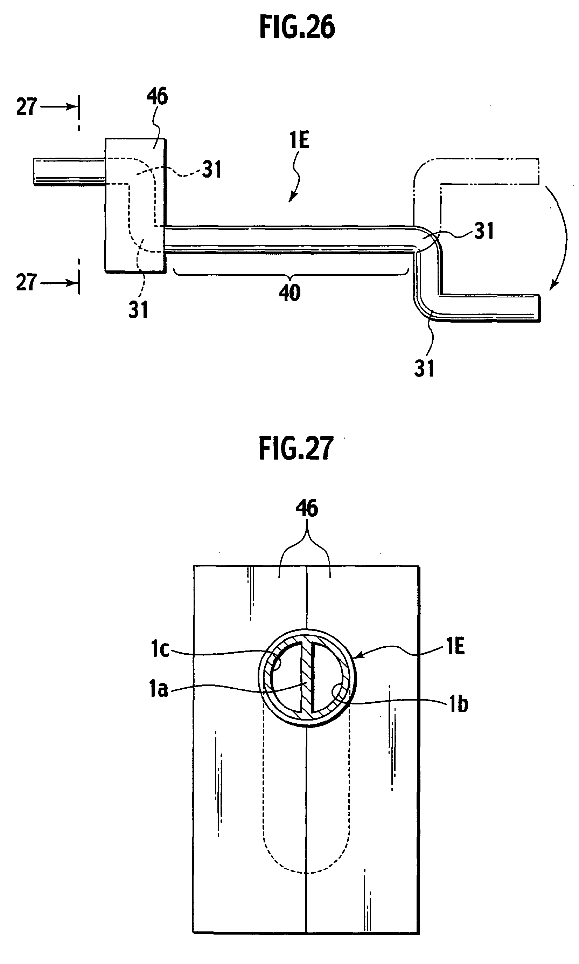

Figs. 24 to 27 show another working method for producing bent portions 31 and a twisted portion 40, Fig. 24 being a perspective view of a perforated pipe 1E after being worked, Fig. 25 being a perspective view of a perforated pipe 1E' after being worked for bending, Fig. 26 being a perspective view for explaining a twisting work, and Fig. 27 being a sectional view taken along line 27-27 in Fig. 26.

In Fig. 24, the perforated pipe 1E has four bent portions 31 in which the orientation of a longitudinal direction of the perforated pipe 1E has been changed and it further has a twisted portion 40 obtained by twisting the perforated pipe 1E by an angle of 180° in a circumferential direction about an axial center thereof at a central portion thereof.

A working procedure for the perforated pipe 1E will be explained next. As shown in Fig. 25, first, bending work is applied to a straight perforated pipe. At that time, the bent portion 31 on one side of the perforated pipe is formed at an angle of 180° reverse from a final bending direction. Next, as shown in Fig. 26, a portion of the perforated pipe 1E' near the other side thereof is clamped by a pair of outer periphery clamping portions 46 and the one side of the perforated pipe 1E' is rotated by an angle of 180° utilizing a rotational operating handle. A twisting force acts on a central portion of the perforated pipe 1E' according to the rotation, so that the twisted portion 40 is formed at a central straight portion of the perforated pipe. Thus, the working procedure is completed.

According to the twisting work, a perforated pipe can be applied with a twisting work using a simple twisting tool.

In the fourth to the sixth embodiments, the connection structure between each of the perforated pipes 1B to 1D and the branch pipes 2A and 2A is configured like the second embodiment. However, it may be configured in the same manner as the first embodiment, or it may be configured using the joint adapter 6 like the third embodiment. When ends of the branch pipes 2A and 2A are worked and connected to the perforated pipe like one of the fourth to the sixth embodiments, it is unnecessary to further work the ends of each of the perforated pipes 1B to 1D which is produced with the bent portion 31 or the twisted portion 40 or both. Therefore, working damage to each of the perforated pipes 1B to 1D can be suppressed as much as possible, which is desirable.

In the first to the sixth embodiments, each of the perforated pipes 1A and 1 has two holes 2b and 2c. However, the present invention is substantially similarly applicable to even a perforated pipe which has three or more holes and to which three or more branch pipes 2 and 2A are connected.

## Claims

1. A pipe arrangement branching structure comprising:
a perforated pipe having a plurality of holes partitioned by a partition wall; and
a plurality of branch pipes connected to the respective holes of the perforated pipe in a liquid-tight manner.

2. The pipe arrangement branching structure according to claim 1, wherein
an outer shape of the perforated pipe is formed to have a substantially circular section.

3. The pipe arrangement branching structure according to claim 1, wherein
the respective branch pipes are inserted into the respective holes of the perforated pipe and the perforated pipe and the respective branch pipes are brazed to each other.

4. The pipe arrangement branching structure according to claim 1, wherein
working for plastic deformation is applied to an end of the perforated pipe and shapes of the respective holes are formed to coincide with the outer shapes of the respective branch pipes.

5. The pipe arrangement branching structure according to claim 1, wherein
working for plastic deformation is applied to ends of the respective branch pipes and outer shapes of the branch pipes are formed to coincide with shapes of the respective holes of the perforated pipe.

6. The pipe arrangement branching structure according to claim 1, wherein
the perforated pipe and the branch pipes are connected to each other via a joint adapter.

7. The pipe arrangement branching structure according to claim 1, wherein
the perforated pipe has a bent portion in which the orientation of a longitudinal direction of the perforated pipe has been changed.

8. The pipe arrangement branching structure according to claim 1, wherein
the perforated pipe has a twisted portion produced by twisting the perforated pipe about an axial center thereof.

9. A method for working a perforated pipe in a pipe arrangement branching structure including a perforated pipe having a plurality of holes partitioned by a partition wall, and a plurality of branch pipes connected to the respective holes of the perforated pipe in a liquid-tight manner, the method comprising:
performing working for plastic deformation by using a rod jig which is inserted into each hole of the perforated pipe to regulate a shape of an inner peripheral face of each hole into a predetermined shape and a press die which is disposed on an outer peripheral face of the perforated pipe to regulate a shape of the outer peripheral face of the perforated pipe to a predetermined shape.

10. A method for working a branch pipe in a pipe arrangement branching structure including a perforated pipe having a plurality of holes partitioned by a partition wall, and a plurality of branch pipes connected to the respective holes of the perforated pipe in a liquid-tight manner, the method comprising:
performing working for plastic deformation by using a rod jig which is inserted into each of the branch pipes to regulate a shape of an inner peripheral face of the branch pipe to a predetermined shape and a press die which is arranged on an outer peripheral face of the branch pipe to regulate a shape of the outer peripheral face of the branch pipe to a predetermined shape.

11. A method for working a perforated pipe in a pipe arrangement branching structure including a perforated pipe having a plurality of holes partitioned by a partition wall, and a plurality of branch pipes connected to the respective holes of the perforated pipe in a liquid-tight manner, the method comprising:
applying bending work for changing the orientation of a longitudinal direction of the perforation pipe is applied to the perforation pipe.

12. A method for working a perforated pipe in a pipe arrangement branching structure including a perforated pipe having a plurality of holes partitioned by a partition wall, and a plurality of branch pipes connected to the respective holes of the perforated pipe in a liquid-tight manner, the method comprising:
applying twisting work for twisting the perforated pipe about its axial center to the perforated pipe.

13. A method for working a perforated pipe in a pipe arrangement branching structure including a perforated pipe having a plurality of holes partitioned by a partition wall, and a plurality of branch pipes connected to the respective holes of the perforated pipe in a liquid-tight manner, , the method comprising:
applying bending work for changing the orientation of a longitudinal direction of the perforation pipe and twisting work for twisting the perforated pipe about its axial center to the perforated pipe.

14. The method for working a perforated pipe according to claim 13, wherein
the bending work is first applied to the perforated pipe and the twisting work is then applied thereto.

15. The method for working a perforated pipe according to claim 13, wherein
the twisting work is first applied to the perforated pipe and the bending work is then applied thereto.

16. The method for working a perforated pipe according to claim 13, wherein
the bending work and the twisting work are simultaneously applied to the perforated pipe.
